# EUROPÄISCHE PATENTANMELDUNG

(11) **EP 3 537 093 A1**
(43) Veröffentlichungstag der Anmeldung: **11.09.2019**
(21) Anmeldenummer: 19159308.6
(22) Anmeldetag: 19.08.2011
(51) Int. Cl.: F42B 3/103, F42B 3/198, F42B 3/195

(54) **RINGE- ODER PLATTENFÖRMIGES ELEMENT UND VERFAHREN ZUR HERSTELLUNG**

(30) Priorität: 17.09.2010 DE 102010045624; 17.09.2010 DE 102010045641
(62) Teilanmeldung aus: 11006788.1
(71) Anmelder: Schott AG, 55122 Mainz (DE)
(72) Erfinder: HARTL, Helmut, 1210 Wien (AT); PFEIFFER, Thomas, 84036 Kumhausen (DE)
(74) Vertreter: Sawodny, Michael-Wolfgang

(57) **Zusammenfassung**

Die Erfindung betrifft ein Ring- oder plattenförmiges Element, insbesondere für eine Metall-Fixiermaterial-Durchführung, insbesondere für Einrichtungen, die hohen Drücken ausgesetzt sind, bevorzugt Anzündern von Airbags oder Gurtspannern,
mit einer Durchgangsöffnung, wobei die Durchgangsöffnung im Wesentlichen in der Mitte des ring- oder plattenförmigen Elementes angeordnet ist, das plattenförmige Element eine Dicke aufweist.

Die Erfindung ist dadurch gekennzeichnet, dass
das ring- oder plattenförmige Element im Bereich der Durchgangsöffnung einen Freistellungsbereich hat
und das ring- oder plattenförmige Element im Freistellungsbereich wenigstens eine um die Höhe des Freistellungsbereiches reduzierte Dicke aufweist, die derart gewählt ist, dass die Durchgangsöffnung aus dem ring- oder plattenförmigen Element mit der reduzierten Dicke ausgestanzt wird, wobei
der Freistellungsbereich durch Formen eingebracht ist

## Beschreibung

Die Erfindung betrifft ein ring- oder plattenförmiges Element, insbesondere für eine Metall-Fixiermaterial-Durchführung, insbesondere für Einrichtungen, die hohen Drücken ausgesetzt sind, bevorzugt Anzünder von Airbags oder Gurtspannern, eine Metall-Fixermaterial-Durchführung sowie eine Verwendung einer derartigen Metall-Fixiermaterial-Durchfüh rung.

Metall-Fixiermaterial-Durchführungen sind in verschiedenen Ausführungen aus dem Stand der Technik vorbekannt. Unter Metall-Fixiermaterial-Durchführungen versteht man vakuumdichte Verschmelzungen von Fixiermaterialien, insbesondere aus Gläsern, Glaskeramiken oder Kunststoffen in Metallen. Die Metalle fungieren dabei als elektrische Leiter. Stellvertretend wird dabei auf die US-A-5,345,872, US-A-3,274,937 verwiesen. Derartige Durchführungen sind in der Elektronik und in der Elektrotechnik weit verbreitet. Das zum Einschmelzen verwendete Material, insbesondere Glas, dient hierbei als Isolator. Typische Metall-Fixiermaterial-Durchführungen sind derart aufgebaut, dass metallische Innenleiter in ein vorgeformtes Sinterglasteil eingeschmolzen werden, wobei das Sinterglasteil oder das Glasrohr in ein äußeres Metallteil mit dem sogenannten Grundkörper, der aus einem ring- oder plattenförmigen Element gebildet wird, eingeschmolzen wird. Als bevorzugte Anwendungen derartiger Metall-Fixiermaterial-Durchführungen gelten beispielsweise Zündeinrichtungen. Diese werden unter anderem für Airbags oder Gurtspanner bei Kraftfahrzeugen verwendet. In diesem Fall sind die Metall-Fixiermaterial-Durchführungen Bestandteil einer Zündeinrichtung. Die gesamte Zündeinrichtung umfasst außer der Metall-Fixiermaterial-Durchführung eine Zündbrücke, den Sprengstoff sowie eine Metallabdeckung, die den Zündmechanismus dicht umschließt. Durch die Durchführung können entweder ein oder zwei oder mehr als zwei metallische Stifte hindurchgeführt werden. Bei einer besonders bevorzugten Ausführungsform mit einem metallischen Stift liegt das Gehäuse auf Masse, bei einer bevorzugten zweipoligen Ausführung auf einer der Stifte.

Aus der US 2006/0222881 A1, der US 2004/0216631, der EP-A-1 455 160, der US 2007/0187934 A1 sowie der US-A-1 813 906 sind Metall-Fixiermaterial-Durchführungen insbesondere für Anzünder von Airbags oder Gurtspannern bekannt geworden, die sich dadurch auszeichnen, dass die Durchgangsöffnung für die Metallstifte aus dem Grundkörper ausgestanzt ist. Bei der Herstellung der Grundkörper werden gemäß der US 2007/0187934 A1 aus einem Bandmaterial mit einer Dicke im Bereich zwischen 1 mm und 5 mm, bevorzugt 1,5 mm und 3,5 mm, insbesondere zwischen 1,8 mm bis 3,0 mm, ganz besonders bevorzugt zwischen 2,0 mm bis 2,6 mm, die Öffnungen durch die gesamte Dicke des Grundkörpers D mittels des Stanzprozesses hindurchgetrieben.

Der Metallstift im Fixiermaterial wird über die gesamte Dicke D des Grundkörpers, der im oben genannten Bereich liegt in die in den Grundkörper eingestanzte Eingangsöffnung eingelassen.

Des Weiteren ist die Durchgangsöffnung bei den Durchführungen mit mehr als einem Stift gemäß der US 2007/0187934 A1 außermittig angeordnet.

Das Ausstanzen aus einem Blechmaterial gemäß der US 2007/0187934 A1 hat eine Vielzahl von Nachteilen. Ein Nachteil besteht darin, dass bei einem Stanzen aus einem Bandmaterial, beispielsweise einem Blech des Grundkörpers, ein großer Anteil an Materialabfall entsteht.

Aus der DE 10 2006 056077 A1 ist eine Zündvorrichtung für eine pyrotechnische Schutzvorrichtung bekannt geworden, die eine Ummantelung zur Lagefixierung der Stromdurchführung des Metallstiftes aufweist und Mittel zur Vermeidung einer Relativbewegung zwischen Ummantelung und Metallstift. Wie im Falle der US 2007/0187934A1 wird auch bei der DE 10 2006 056 077 A1 der Grundkörper aus einem Blech, beispielsweise einem Bandmaterial ausgestanzt, was einen großen Materialabfall zur Folge hat. Des Weiteren waren wie in der US 2007/0187934A1 die Durchgangsöffnungen außeraxial angeordnet.

Die EP 1 491 848 A1 zeigt eine Stromdurchführung mit einer mittig angeordneten Durchgangsöffnung für einen stiftförmigen Leiter. Die Durchgangsöffnung ist in ihrer Herstellweise nicht beschrieben und erstreckt sich über die gesamte Dicke des Grundkörpers.

Insbesondere bei Metall-Fixiermaterial-Durchführungen mit zwei Metallstiften und außermittig angeordneter Durchgangsöffnung ergibt sich das Problem, dass die außermittige Durchgangsöffnung zu einer Schwächung der Einglasung führt.

Aufgabe der Erfindung ist es somit, die zuvor beschriebenen Nachteile gemäß dem Stand der Technik zu vermeiden und insbesondere einen Grundkörper in Form eines ring- oder plattenförmigen Elementes für eine Metall-Fixiermaterial-Durchführung anzugeben, der mit weniger Materialabfall als im Stand der Technik, insbesondere auch in einem Kaltformverfahren hergestellt werden kann. Des Weiteren soll sich der Grundkörper besonders einfach herstellen lassen.

Erfindungsgemäß wird diese Aufgabe durch ein plattenförmiges Element, das den Grundkörper für eine Metall-Fixiermaterial-Durchführung ausbildet, gelöst, das eine Durchgangsöffnung aufweist, die im Wesentlichen in der Mitte des plattenförmigen Elementes angeordnet ist, wobei das plattenförmige Element eine Dicke (D) aufweist und im Bereich der Durchgangsöffnung im plattenförmigen Element ein Freistellungsbereich vorgesehen ist. Durch den Freistellungsbereich wird die Dicke des plattenförmigen Elementes im Bereich der Durchgangsöffnung reduziert, und zwar bevorzugt derart, dass die Durchgangsöffnung durch das ring- oder plattenförmige Element im Bereich des Freistellungsbereiches ausgestanzt werden kann. Durch das Ausstanzen der Öffnung wird ein besonders einfach herzustellender Grundkörper zur Verfügung gestellt.

Beträgt beispielsweise die Dicke des gesamten ring- oderplattenförmigen Elementes 4 mm, so können mit Hilfe eines Freistellungsbereichs, der beispielsweise mittels eines Stempels aus einem kaltgeformten Material herausgedrückt werden kann, eine reduzierte Dicke DR im Bereich der Durchgangsöffnung zur Verfügung gestellt werden. Beträgt die Höhe HF des Freistellungsbereichs beispielsweise 1,5 mm, so folgt bei einer Dicke D von 4 mm eine reduzierte Dicke DR von 2,5 mm im Bereich des ring- oder plattenförmigen Elementes, in dem die Durchgangsöffnung hergestellt werden soll. Die reduzierte Dicke DR von 2,5 mm erlaubt dann auch bei einem harten bzw. festen Material, wie es im Falle einer Kaltformung des Grundkörpers vorliegt, ein Ausstanzen der Durchgangsöffnung aus dem Bereich der reduzierten Dicke.

Besonders bevorzugt ist es, wenn die Dicke (D) des ring- oder plattenförmigen Elementes durch den Freistellungsbereich zwischen 20 % und 60 %, insbesondere zwischen 30 % und 50 %, reduziert wird.

Um das ring- oder plattenförmige Element kompatibel zu den derzeit eingesetzten gedrehten Bauteilen zu machen, ist vorgesehen, dass die Dicke D des ring- oder plattenförmigen Elementes im Bereich 3,5 bis 6 mm liegt. Um die Stanzbarkeit im Bereich der Durchgangsöffnung zu gewährleisten, liegt die reduzierte Dicke bevorzugt im Bereich 1,5 mm bis 4,5 mm, bevorzugt zwischen 2,0 mm bis 3,0 mm. Durch die Kompatibilität ist es möglich, das mittels Formen, insbesondere Kaltformen und Stanzen hergestellte Bauteile gemäß der Erfindung als Ersatz für durch Drehen hergestellten Bauteile in Airbag-Zündern zu verwenden, ohne das Herstellverfahren wesentlich ändern zu müssen.

Besonders bevorzugt ist es, wenn das ring- oder plattenförmige Element aus einem Stahl, insbesondere einem Edelstahl mit einem Kupferanteil im Bereich 1 Gew.% bis 5 Gew.%, insbesondere zwischen 2 Gew.% bis 4 Gew.% besteht. Ein derartiges Material ermöglicht es, dass das plattenförmige Element beziehungsweise der Grundkörper durch Umformen, insbesondere Kaltumformen, beispielsweise aus einem Drahtmaterial hergestellt werden kann. Hierbei wird beispielsweise aus einem Draht aus einem Stahl mit dem angegebenen Kupferanteil zunächst ein Stück abgeschnitten und sodann in die gewünschte Form durch Formen, z. B. Stauchen, gebracht. Dies ist nur möglich, wenn das Material eine gewisse Elastizität aufweist, was durch den angegebenen Kupferanteil erreicht wird. Durch das beschriebene Umformen, insbesondere Kaltumformen, wird das Material sehr stark verdichtet beziehungsweise verfestigt.

Das Material des plattenförmigen Körpers muss nicht nur durch Formen, insbesondere Kaltformen, verarbeitbar sein, sondern auch eine zuverlässige Laserschweißbarkeit gewährleisten.

Überraschenderweise wurde herausgefunden, dass ein Stahl, insbesondere ein Edelstahl mit einem Kupferanteil von 1 Gew.% bis 5 Gew.%, diese beiden gegensätzlichen Eigenschaften in sich vereint, nämlich zum einen die ausreichende Elastizität für ein Umformverfahren, insbesondere Kaltumformverfahren und andererseits eine ausreichende Festigkeit beziehungsweise Biegesteifigkeit, um den hohen Auszugskräften beziehungsweise der hohen Ausdruckkraft bei Belastung, wie sie in einer Metall-Fixiermaterial-Durchführung in einem Zünder vorkommen kann, zu widerstehen.

Das geformte, insbesondere kaltgeformte ring- oder plattenförmige Element hat aufgrund der runden oder kreisförmigen Außenkontur des im Wesentlichen zylindrischen Drahtes eine im Wesentlichen runde oder kreisförmige Außenform. Um die zuvor beschriebenen Werte der Ausdruckkräfte für den Metallstift in der Metall-Fixiermaterial-Durchführung zu erreichen ist es vorteilhaft, wenn die Durchgangsöffnung derart ausgestaltet ist, dass sie Mittel zur Vermeidung einer Relativbewegung von Fixiermaterial und Grundkörper umfassen.

Dies wird beispielsweise dadurch erreicht, dass Vorsprünge in der Durchführungsöffnung vorgesehen sind oder diese beispielsweise einen im Wesentlichen konischen Verlauf aufweist.

Bei der oben beschriebenen Ausdruckkraft, die charakteristisch für Metall-Fixiermaterial-Durchführungen sind, handelt es sich um diejenige Kraft, die aufgewendet werden muss, um das Fixiermaterial, das in die Durchgangsöffnung der Metall-Fixiermaterial-Durchführung eingebracht ist, aus der Durchführung auszudrücken. Die Höhe der Ausdruckkraft kann entweder hydrostatisch oder mechanisch festgestellt werden. Wird die Ausdruckkraft mechanisch festgestellt, so wird die Fläche des Fixiermaterials mit einem Stempel beaufschlagt, wobei die Fläche des Stempels, die auf das Fixiermaterial drückt, geringer ist als die Fläche des Fixiermaterials.

Alternativ hierzu kann die Ausdruckkraft hydrostatisch gemessen werden. Im Fall einer hydrostatischen Messung wird das Fixiermaterial mit einem hydrostatischen Druck, beispielsweise einem Wasserdruck, beaufschlagt und gemessen, bei welchem hydrostatischem Druck das Fixiermaterial aus der Durchgangsöffnung ausgetrieben wird.

Neben dem erfindungsgemäßen ring- oder plattenförmigen Element stellt die Erfindung auch eine Metall-Fixiermaterial-Durchführung mit einem derartigen ring- oder plattenförmigen Element als Grundkörper zur Verfügung, wobei der Metallstift der Metall-Fixiermaterial-Durchführung in die Durchgangsöffnung des ring- oder plattenförmigen Elementes mit Hilfe eines Fixiermaterials eingeglast wird.

Hierzu wird zunächst der Metallstift in das Fixiermaterial, das beispielsweise ein Glaspfropfen sein kann, eingeschmolzen. Sodann wird der Glaspfropfen zusammen mit dem Metallstift in die Durchgangsöffnung eingebracht, Glas und Metallring, hier das ring- oder plattenförmige Element, erwärmt, derart, dass nach dem Abkühlen das Metall auf das Fixiermaterial, hier den Glaspfropfen, aufschrumpft.

Dabei ist es ebenso bevorzugt, dass der Metallstift Mittel zur Vermeidung von Relativbewegungen aufweist. Diese können besonders bevorzugt lokale Aufweitungen und/oder Einschnürungen des Durchmessers des Metallstifts im Bereich der Einglasung beinhalten. Im einfachsten Fall wird das durch Riffel im Metallstift erreicht, die beispielsweise durch Rollen des Metallstifts über geeignete Prägewerkzeuge erzeugt werden können. Andere geeignete Formen und Herstellungsverfahren sind selbstverständlich ebenso von der Erfindung umfasst.

Bevorzugt wird eine Metall-Fixiermaterial-Durchführung angegeben, bei der zwei Metallstifte vorgesehen sind. Da die Durchgangsöffnung in dem ring- oder plattenförmigen Element gemäß der Erfindung im Wesentlichen in der Mitte angeordnet ist, sind die beiden Metallstifte gebogen ausgeführt. Während einer der Metallstifte durch die Durchgangsöffnung in dem Glaspfropfen isolierend hindurchgeführt wird, ist der andere Metallstift bevorzugt als Massestift ausgebildet und mit dem Grundkörper leitend verbunden.

Die erfindungsgemäße Metall-Fixiermaterial-Durchführung wird bevorzugt in Zündeinrichtungen beliebiger Ausführung verwendet. Beispielsweise kann eine derartige Zündeinrichtung für eine pyrotechnische Schutzvorrichtung, insbesondere für einen Airbag oder Gurtstraffer, vorgesehen werden. Eine derartige pyrotechnische Schutzvorrichtung umfasst eine Metall-Fixiermaterial-Durchführung gemäß der Erfindung sowie eine mit dem Grundkörper dieser Metall-Fixiermaterial-Durchführung verbundene Kappe, wobei zwischen Metall-Fixiermaterial-Durchführung und Kappe eine Treibladung eingeschlossen ist. Die Zündeinrichtung mit der erfindungsgemäß gestalteten Metall-Fixiermaterial-Durchführung kann in Gasgeneratoren eingesetzt werden, beispielsweise Heißgasgeneratoren, Kaltgasgeneratoren, Hybridgeneratoren. Bevorzugtes Einsatzgebiete sind, wie oben genannt, Einrichtungen für pyrotechnische Schutzsysteme, beispielsweise Airbags und Gurtspanner. Besonders bevorzugt wird ein plattenförmiger Körper, insbesondere für eine Metall-Fixiermaterial-Durchführung aus einem Rohling durch Umformen hergestellt.

Andere Anwendungen des erfindungsgemäßen ring- oder plattenförmigen Elements sind ebenso von der Erfindung umfasst. Eine weitere bevorzugte Anwendung ist beispielsweise die Verwendung als Durchführungselement eines Drucksensors.

Bei einem Verfahren zur Herstellung einer Metall-Fixiermaterialdurchführung durch Umformen wird ein Rohling, insbesondere aus einem drahtförmigen Material zur Verfügung gestellt und der Rohling einer Bearbeitung unterzogen, derart, dass in ein aus dem Rohling umgeformtes ring- oder plattenförmiges Element eine Durchgangsöffnung, insbesondere durch Stanzen, eingebracht werden kann.

Die Bearbeitung des Rohlings bzw. die Formgebung des Rohlings erfolgen bevorzugt alleine durch Formen, insbesondere durch Kaltformen. Die Bearbeitungsschritte des Verfahrens können in unterschiedlicher Reihenfolge durchgeführt werden.

Eine mögliche Abfolge ohne Beschränkung hierauf umfasst die folgenden Verfahrensschritte:
- es wird ein Rohling insbesondere aus einem drahtförmigen Material zur Verfügung gestellt.
- der Rohling wird insbesondere durch Stauchen geformt, insbesondere kalt geformt, wobei die relativen geometrischen Abmessungen verändert werden, ergebend das plattenförmige Element mit einer im Wesentlichen runden Außenkontur.
- in das plattenförmige Element wird ein Freistellungsbereich eingebracht.
- nach Einbringen des Freistellungsbereiches in das plattenförmige Element, der dazu führt, dass das plattenförmige Element im Bereich der herzustellenden Durchgangsöffnung eine geringere Dicke aufweist als die Dicke des plattenförmigen Elementes, insbesondere des Grundkörpers, wird durch die reduzierte Dicke im Bereich der Durchgangsöffnung mit Hilfe eines Stanzprozesses die Durchgangsöffnung erzeugt.

Der Freistellungsbereich kann in den Rohling oder das ring- oder plattenförmige Element beziehungsweise den Grundkörper eingebracht werden, indem der Rohling oder das ring- oder plattenförmige Element gegen einen Stempel gepresst wird. Im Bereich des Stempels umfließt das Material den Rohling oder das ring- oder plattenförmige Element, das bevorzugt ein Stahl, insbesondere einen rostfreien Stahl, mit einem Kupferanteil von 1 bis 5 Gew.-% Kupfer ist, aufgrund des Druckes den Stempel. Auf diese Art und Weise kann durch den Stempel ein Freistellungsbereich in den Rohling oder das ring- oder plattenförmige Element eingebracht werden. Alternativ ist es möglich, nicht den Rohling oder das ring- oder plattenförmige Element gegen einen Stempel zu pressen, sondern einen Stempel gegen wenigstens eine Seite des Rohlings oder des ring- oder plattenförmigen Elementes. Dies führt dazu, dass aufgrund des Druckes das Material des plattenförmigen Körpers auf der gegenüberliegenden Seite zu der Seite, auf die der Druck ausgeübt wird, herausgedrückt wird. Ergebnis dieses Prozesses ist wiederum die Herstellung eines Freistellungsbereiches.

Neben dem Freistellungsbereich, wie zuvor beschrieben, kann durch Formen, beziehungsweise Umformen, insbesondere Kaltumformen, auf der dem Freistellungsbereich gegenüberliegenden Seite eine weitere Öffnung eingebracht werden, beispielsweise eine konische Öffnung.

Nach Einbringen des Freistellungsbereiches bzw. des Freistellungsbereichs und/oder der weiteren Öffnung wird im Bereich des Freistellungsbereiches bzw. der weiteren Öffnung ein Stanzwerkzeug eingebracht und durch Stanzen die Durchgangsöffnung erzeugt. Bevorzugt ist die Dicke des ring- oder plattenförmigen Elementes im Bereich der zu stanzenden Durchgangsöffnung reduziert, vorzugsweise auf Werte von 1,5 mm bis 4,5 mm.

Besonders bevorzugt ist es, wenn mit Hilfe des Umformprozesses und Stanzwerkzeuges eine konisch zulaufende Durchgangsöffnung spanlos hergestellt wird.

Der Vorteil des oben beschrieben Verfahrens liegt darin, dass die Herstellung des ring- oder plattenförmigen Elementes, das in einer Metall-Fixiermaterial-Durchführung Verwendung findet, bei allen unterschiedlichen Verfahrensschritten im Wesentlichen im gleichen Zeitintervall erfolgt. Dies bedeutet, dass der Schritt des Formens, insbesondere Kaltformens, der Schritt des Einbringens der Freistellungsöffnung beziehungsweise des Freistellungsbereiches bzw. der weiteren Öffnung sowie der Schritt des Stanzens der Durchgangsöffnung in das ring- oder plattenförmige Element im Wesentlichen dieselbe Zeit beansprucht. Auf diese Art und Weise ist es möglich, ausgehend von einem drahtförmigen Material, mit einem im Wesentlichen gleichen Arbeitstakt an verschiedenen Arbeitsstationen, d.h. der Arbeitsstation für das Kaltformen, der Arbeitsstation für das Einbringen der Freistellungsöffnung und der Arbeitsstation des Stanzens ein ring- oder plattenförmiges Element mit einer Durchgangsöffnung herzustellen. Ist es erforderlich, wie beispielsweise im Stand der Technik bei einem durch Zerspanen hergestellten oder geformten ring- oder plattenförmigen Element die Bohrung nicht durch einen Stanzprozess, sondern mittels eines Bohrprozesses einzubringen, so benötigt der Bohrschritt eine viel längere Zeit als die Umformung, wodurch die Herstellung des ring- oder plattenförmigen Elementes mindestens die doppelte Zeit, verglichen mit dem beschriebenen Umformverfahren, erfordert.

Ein weiterer Vorteil des erfindungsgemäßen ring- oder plattenförmigen Elements ist es, dass bei seiner beschriebenen Herstellung keiner oder höchstens sehr wenig Materialabfall entsteht. Daher kann es besonders effizient hergestellt werden.

Wie zuvor angegeben ist es bevorzugt, wenn das plattenförmige Element aus einem Stahl, insbesondere einem rostfreien Edelstahl mit einem Kupferanteil im Bereich 1 Gew.% bis 5 Gew.%, insbesondere zwischen 2,0 Gew.% bis 4 Gew.% besteht. Ein derartiges Material ermöglicht es, dass das ring- oder plattenförmige Element beziehungsweise der Grundkörper durch Umformen beispielsweise aus einem Drahtmaterial hergestellt werden kann. Hierbei wird aus einem Stahldraht mit dem oben angegebenen Kupferanteil zunächst ein Stück abgeschnitten. In einem weiteren Schritt wird er in die gewünschte Form für das plattenförmige Element durch Umformen, z. B. Stauchen, gebracht. Dies ist nur möglich, wenn das Material eine gewisse Elastizität aufweist, was durch den angegebenen Kupferanteil erreicht wird. Durch das beschriebene Umformen wird das Material sehr stark verdichtet beziehungsweise verfestigt.

Das Material muss aber nicht nur durch Formen, insbesondere Kaltformen, verarbeitbar sein, sondern bei Verwendung für z. B. Airbag-Zündern auch eine sicheres Halten des Fixiermaterials in der Durchführungsöffnung ermöglichen. Ein Maß dafür sind insbesondere bei der Verwendung in einem Zünder die Ausdrückkräfte, die mechanisch auf das Fixiermaterial wirken. Für die Höhe der Ausdruckskräfte gibt es eine Vielzahl von Industriestandards. Sie reichen beispielsweise von 1350 bar oder 1360 bar über 1500 bar über 1600 bar und 1750 bar bis zu 2000 bar oder 2500 bar oder sogar 3000 bar. Die genannten Zahlenwerte sind zu den Ausdruckkräften korrespondierende Druckangaben und werden durch die zuvor beschriebenen Verfahren hydrostatisch gemessen. In der Anwendung als Zünder korrelieren sie mit den relevanten Explosionsdrücken.

Des Weiteren muss das Material auch eine zuverlässige Laserschweißbarkeit gewährleisten, welches ein gängiges Verfahren ist, um die Zündkappe anzubringen.

Es hat sich gezeigt, dass der Freistellungsbereich nicht nur die Stanzbarkeit der Durchgangsöffnung ermöglicht. Die Reduzierung der Dicke des ring- oder plattenförmigen Elements im Freistellungsbereich kann bei der Druckbeaufschlagung, beispielsweise durch den Explosionsdruck, auch eine lokale Verbiegung des Elements begünstigen. Die Erfinder haben erkannt, dass diese Verbiegung nicht negativ sein muss, sondern die Auszugsfestigkeit des Fixiermaterials in der Durchgangsöffnung sogar erhöhen kann, insbesondere wenn die Durchgangsöffnung die beschriebenen Mittel zum Verhindern der Relativbewegung aufweist.

Dies kann wie folgt erklärt werden: Befindet sich der Freistellungsbereich und damit die Freistellungsöffnung auf der druckabgewandten Seite des Elements (i.A. auf der Unterseite), wirkt der Druck, wie er beispielsweise beim Zünden des Zünders entsteht, aber auch bei der Messung der Auszugskräfte, auf die gesamte Oberseite des Elements. Die Durchbiegung des Elements ist u. a. von der Festigkeit und der Dicke des Materials abhängig. Im Bereich außerhalb des Freistellungsbereichs ist das Material in einem erfindungsgemäßen Element so verfestigt und dick, dass eigentlich keine Durchbiegung erfolgen kann. Im Bereich der reduzierten Dicke im Freistellungsbereich kann jedoch eine lokale Durchbiegung erfolgen, die zu einer Stauchung des Materials auf der Oberseite und zu einer Dehnung auf dessen Unterseite führt. Dies führt dazu, dass die Durchgangsöffnung tendenziell im oberen Bereich (d.h. auf der dem Druck zugewandten Seite) eingedrückt und auf der Unterseite aufgeweitet wird. Befindet sich das Fixiermaterial (und bevorzugt darin der Metallstift) in der Durchgangsöffnung, wird im oberen Bereich ein seitlicher Druck senkrecht zur Oberfläche der Durchgangsöffnung und somit des Einglasungsbereichs des Fixiermaterials und gleichzeitig auf den eingeglasten Metallstift ausgeübt. Dieser lokale Pressdruck kann zu einer nennenswerten Erhöhung der Ausdruckkräfte des Fixiermaterials aus der Durchgangsöffnung führen. Diese Erhöhung kann noch dadurch gesteigert werden, indem die Durchgangsöffnung im oberen Bereich (des Eindrückens) einen größeren Durchmesser als im unteren Bereich (der Aufweitung) aufweist. Die unterschiedlichen Durchmesser repräsentieren bevorzugt die Mittel zum Vermeiden der Relativbewegung, die bevorzugt durch eine Stufe oder einen konischen Verlauf der Durchgangsöffnung realisiert werden.

Des Weiteren kann die die Reduzierung der Dicke des ring- oder plattenförmigen Elements im Freistellungsbereich die Verschweißbarkeit des Elements mit weiteren Elementen verbessern, beispielsweise der Abdeckkappe von Zündern oder Drucksensoren. Die Reduzierung der Dicke des Elements im Freistellungsbereich bewirkt nämlich, dass das Element einen umlaufenden ringförmigen Bereich mit im Vergleich zum Freistellungsbereich größerer Dicke aufweist. Bei der Herstellung z.B. eines Zünders oder eines Drucksensors befindet sich üblicherweise ein in der Durchgangsöffnung eingeglaster Metallstift an dem ring- oder plattenförmigen Element. Ebenso kann ein zweiter Leiter an dem Boden des Elements angebracht sein. Die Deckkappe wird üblicherweise am Außenumfangsbereich des Elements angeschweißt. Beim Verschweißen der Deckkappe wird zwangsläufig Wärme in das Element eingetragen. Dabei muss dafür gesorgt werden, dass durch diesen Wärmeeintrag das Glas als Fixiermaterial nicht geschädigt wird. Der durch den Freistellungsbereich bedingte umlaufende ringförmige Bereich weist eine größere Oberfläche auf, welche die eingetragene Wärme wieder abstrahlen kann und somit die Temperaturbelastung am Fixiermaterial reduziert. Dieser ringförmige Bereich wirkt somit beim Verschweißen sozusagen als Schweißrand. Durch die vereinfachte Verschweißbarkeit kann der Ausschuss in der Weiterverarbeitung des Elements zum Endprodukt reduziert und die Prozessstabilität erhöht werden.

Neben dem beschriebenen Verfahren zur Herstellung des ring- oder plattenförmigen Elementes kann bei einem Verfahren zur Herstellung einer Metall-Fixiermaterial-Durchführung mit einem derartigen ring- oder plattenförmigen Element als Grundkörper zunächst das ring- oder plattenförmige Element, wie oben beschrieben, hergestellt werden. Anschließend wird ein Metallstift in ein Fixiermaterial, das beispielsweise ein Glaspfropfen sein kann, eingeschmolzen. Sodann wird der Glaspfropfen zusammen mit dem Metallstift in die Durchgangsöffnung eingebracht sowie Glas und Metallring, hier das ring- oder plattenförmige Element, erwärmt, sodass nach dem Abkühlen das Metall auf das Fixiermaterial, hier den Glaspfropfen, aufschrumpft.

Bevorzugt wird ein Verfahren zur Herstellung einer Metall-Fixiermaterial-Durchführung, bei der zwei Metallstifte vorgesehen sind. Da die Durchgangsöffnung in dem plattenförmigen Element im Wesentlichen in der Mitte angeordnet ist, sind die beiden Metallstifte gebogen ausgeführt. Während einer der Metallstifte durch die Durchgangsöffnung in dem Glaspfropfen isolierend hindurchgeführt wird, ist der andere Metallstift bevorzugt als Massestift ausgebildet und mit dem Grundkörper leitend verbunden, beispielsweise durch Hartlöten.

Die erfindungsgemäße Lösung wird nachfolgend anhand von Figuren erläutert, ohne hierauf beschränkt zu sein. Darin ist im Einzelnen folgendes dargestellt:
- Fig. 1a-1c: ein ring- oder plattenförmiges Element gemäß der Erfindung;
- Fig. 2a-2c: ein ring- oder plattenförmiges Element gemäß dem Stand der Technik;
- Fig. 3a-3c: eine Metall-Fixiermaterial-Durchführung gemäß der Erfindung;
- Fig. 4a-4c: eine Metall-Fixiermaterial-Durchführung gemäß dem Stand der Technik,
- Fig. 5a-5d: ein Verfahren zur Herstellung eines ring- oder plattenförmigen Elementes gemäß der Erfindung,
- Fig. 6a-6b: Vergleich der Phasenlinien in einem metallurgischen Schliff eines ring- oder plattenförmigen Körpers hergestellt durch Umformen und hergestellt durch Zerspanen.

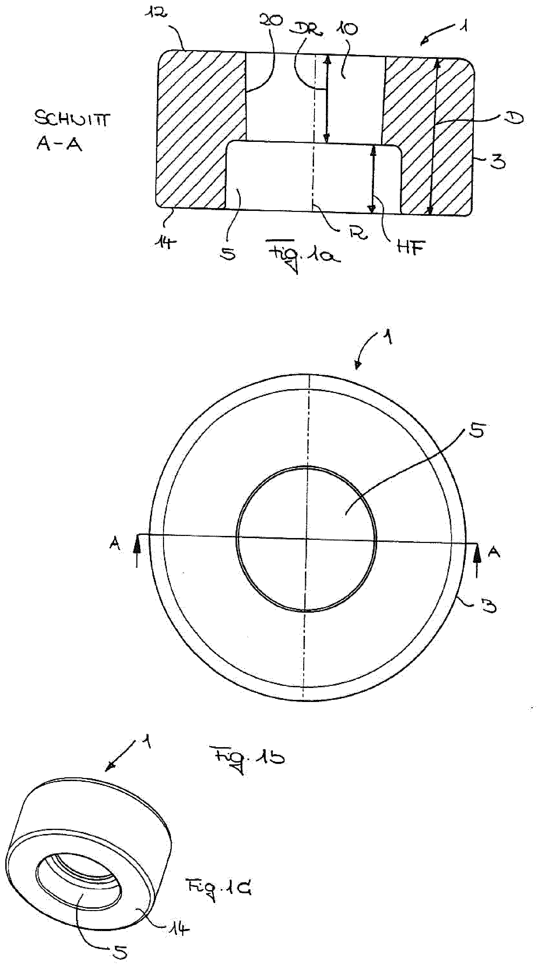

In den Figuren 1a-1c ist ein erfindungsgemäßes ring- oder plattenförmiges Gebilde bzw. Element dargestellt, das im Wesentlichen als Grundkörper für eine Metall-Fixiermaterial-Durchführung eingesetzt wird. Das ring- oder plattenförmige Element 1 hat, wie Fig. 1b in der Draufsicht zeigt, im Wesentlichen eine kreisrunde Außenkontur 3. Der ring- oder plattenförmige Körper 1 wird bevorzugt durch einen Umformprozeß, insbesondere einen Kaltumformprozess, beispielsweise aus einem Draht, hergestellt. Hierbei wird vom Draht zunächst ein Stück abgeschnitten und daran anschließend das Stück Draht durch ein Umformverfahren, insbesondere durch Stauchen, in die kreisrunde oder kreisförmige Form, wie in Fig. 1b in der Draufsicht und Fig. 1c dreidimensional von der Rückseite 14 dargestellt, gebracht.

Daran anschließend wird in das umgeformte Teil 1 beispielsweise durch einen Stempel, ein Freistellungsbereich 5 eingebracht. Beim Einbringen des Freistellungsbereichs mit einem Stempel umfließt das umgeformte Material den Stempel.

Die Reihenfolge der Verfahrensschritte ist nur beispielhaft. Alternativ könnte zuerst der Freistellungsbereich eingebracht werden und das mit dem Freistellungsbereich versehene ringförmige Element durch Umformung, insbesondere Kaltumformung, in die gewünschte Form gebracht werden.

Die Höhe bzw. Dicke des Freistellungsbereichs, die, wie die Draufsicht von der Rückseite 14 in Fig. 1b zeigt, ebenfalls im Wesentlichen kreisförmig ist, beträgt HF.

Die Dicke des gesamten ringförmigen Elements, das durch Umformung erhalten wird, beträgt D. Das Material wird also in den Bereichen, in denen die Durchgangsöffnung im Wesentlichen mittig zur Rotationsachse R des ringförmigen Körpers eingebracht wird, geschwächt, so dass das Vollmaterial, durch das die Durchgangsöffnung 10 im ringförmigen Element 1 hindurchgetrieben werden muss, lediglich DR beträgt. Bevorzugt wird die Dicke D des ringförmigen Körpers durch Einbringen des Freistellungsbereichs zwischen 20 % und 60 %, insbesondere zwischen 30 % und 50 %, reduziert. Liegt eine einziger Freistellungsbereich mit einer Höhe bzw. Dicke HF vor, so liegt dann die Höhe bzw. Dicke HF zwischen 20 % und 60 %, insbesondere zwischen 30 % und 50 % der dicke d des ring- bzw. plattenförmigen Körpers. Die Dicke D des ring- oder plattenförmigen Elements bewegt sich bevorzugt zwischen 3,5 mm bis 6 mm und die Dicke DR des auszustanzenden Bereichs zwischen 1,5 mm und 4,5 mm. Wird das ringförmige Element 1 in einer Metall-Fixiermaterial-Durchführung eingesetzt, so wird in die Durchgangsöffnung 10 ein Metallstift in einem Fixiermaterial, beispielsweise in einem Glaspfropfen, eingebracht. Der Glaspfropfen liegt dann an den Wänden der Durchgangsöffnung an. Um auch bei hohen Drücken ein Herausdrücken des Metallstiftes, der in einen Glaspfropfen eingeglast wurde, aus der Durchgangsöffnung 10 zu vermeiden, sind Mittel vorgesehen, um eine Relativbewegung von der Vorderseite 12 des plattenförmigen Elementes 1 zur Rückseite 14 zu verhindern. In vorliegendem Ausführungsbeispiel wird dies dadurch erreicht, dass die Durchgangsöffnung zumindest über einen Bereich 20 konisch zuläuft.

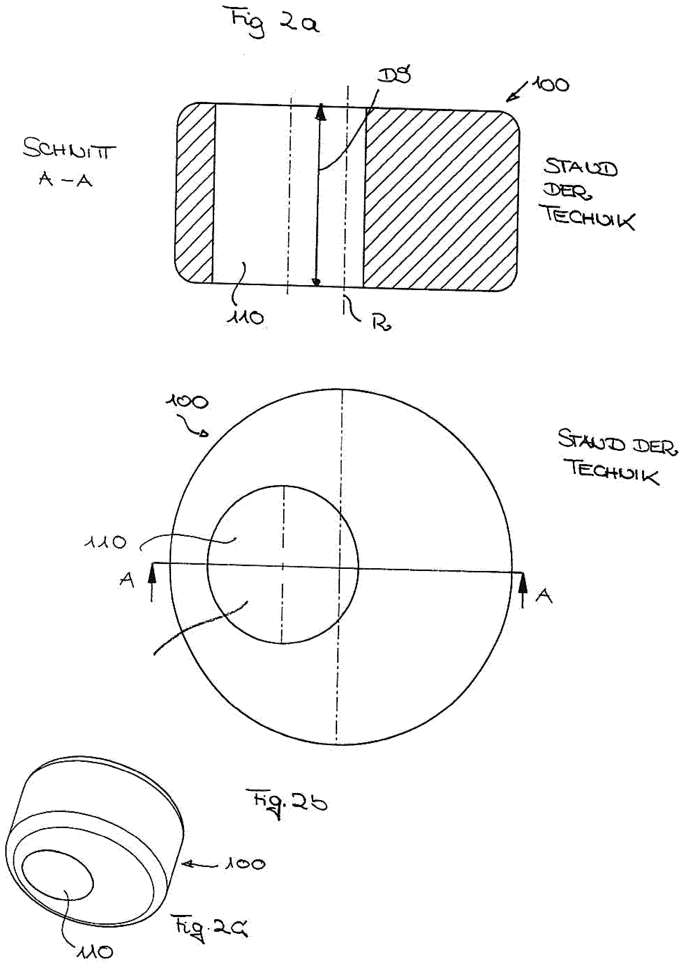

Die Figuren 2a-2c zeigen im Vergleich zu den Figuren 1a-1c ein ring- oder plattenförmiges Element gemäß dem Stand der Technik.

Das ring- oder plattenförmige Element 100 gemäß dem Stand der Technik wird zerspanend hergestellt oder als umgeformtes Bauteil, beispielsweise aus einem Drahtabschnitt, erhalten.

In das Bauteil 100 wird für die Einglasung des Metallstiftes eine Durchgangsöffnung 110 eingebracht. Im Gegensatz zu Figur 1a ist die in den ring- oder plattenförmigen Körper für eine Metall-Fixiermaterial-Durchführung hergestellten ring- oder plattenförmigen Grundkörper eingebrachte Durchgangsöffnung 110 außermittig, d.h. versetzt zur Rotationsachse R, eingebracht. Aufgrund der außermittigen Anordnung und der sehr großen Dicke DS, durch die die Durchgangsöffnung hindurchgetrieben werden muss, ist es nicht möglich, die Durchgangsöffnung aus dem kalt umgeformten ring- oder plattenförmigen Element 100 auszustanzen. Vielmehr wird die Durchgangsöffnung 110 in den Grundkörper mit der Dicke DS von beispielsweise 4,5 mm durch Bohren eingebracht. Dies ist gegenüber einem Stanzschritt ein wesentlich aufwendigeres Verfahren, insbesondere erfordert eine derartige Bohrung eine viel längere Zeit als die Herstellung des ring- oder plattenförmigen Bauteils bzw. Elements mit Hilfe vom Umformen. Das Herausbohren ist insbesondere deswegen nötig, weil durch den Umformprozess das Material stark verdichtet wird, so dass ein einfaches Ausstanzen nicht möglich ist. Eine Draufsicht auf das plattenförmige Element 100 gemäß dem Stand der Technik zeigt Fig. 2b, eine dreidimensionale Ansicht Fig. 2c. Deutlich zu erkennen ist die außermittig angeordnete Durchgangsöffnung 110.

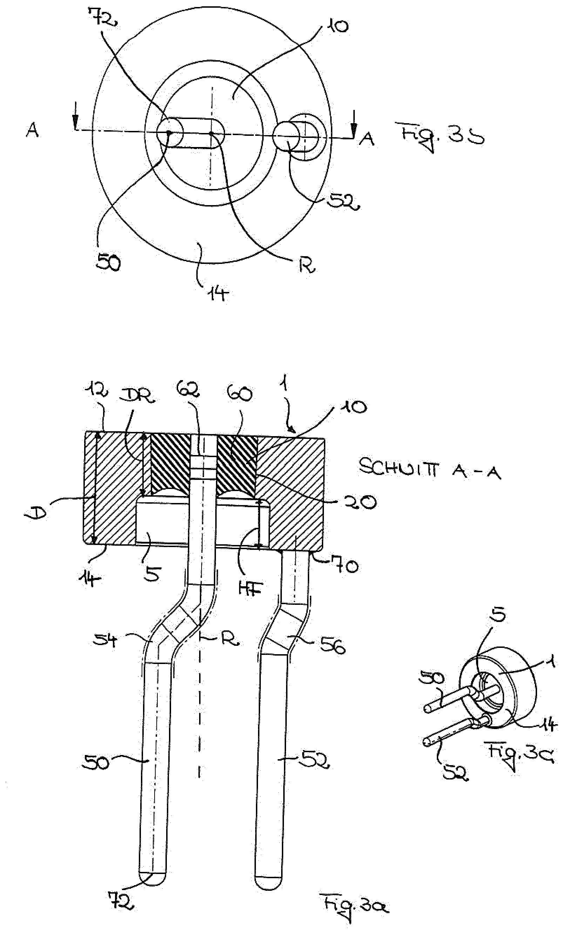

In den Figuren 3a bis 3c ist die Verwendung eines ringförmigen Elementes gemäß den Figuren 1a-1c gemäß der Erfindung in einer Metall-Fixiermaterial-Durchführung, insbesondere für Airbag-Zünder, Gurtspanner gezeigt. Hierbei zeigt Fig. 3a einen Schnitt gemäß Fig. 1a, Fig. 3b eine Draufsicht gemäß Fig. 1b und Fig. 3c eine perspektivische Ansicht gemäß Fig. 1c von der Rückseite 14.

Gleiche Bauteile wie in Fig. 1a und 1c sind mit denselben Bezugsziffern gekennzeichnet.

Deutlich zu erkennen ist das ringförmige Element 1. Des Weiteren zu erkennen ist der Freistellungsbereich 5, der beispielsweise mittels eines Stempels aus dem umgeformten ring- oder plattenförmigen Element 1 herausgedrückt wird. Oberhalb des Stempels ist die aus dem Restmaterial mit der Dicke DR ausgestanzte Durchgangsöffnung 10, die vorliegend einen konischem Verlauf 20 aufweist, zu erkennen. Während in dem Ausführungsbeispiel gemäß Figuren 3a-3c die Konizität über die gesamte Länge der Durchgangsöffnung eingebracht ist, kann in einer alternativen Ausführungsform sich die Konizität nur über einen Teil der Länge der Durchgangsöffnung erstrecken, d.h. die Durchgangsöffnung weist dann zwei Abschnitte auf, einen konischen und daran anschließend einen nicht konischen. Der konische Abschnitt kann dann z. B. durch Umformen bzw. Formen hergestellt werden und der nicht konische durch Stanzen.

Alternativ ist es ebenso möglich, den Freistellungsbereich mittels eines spanenden Verfahrens durch Materialabtrag zu erzeugen, z. B. durch Bohren und/oder Fräsen. Ebenso ist es möglich, die Verfahren zu kombinieren, beispielsweise indem zuerst der Freistellungsbereich beim Umformen durch die zuvor beschriebenen Prozesse vorgeformt wird und anschließend durch spanende Verfahren wie Fräsen und/oder Bohren endgeformt wird. Der Begriff Freistellungsbereich wird somit im Sinne der Erfindung unabhängig von der Art und Weise verwendet, wie er erzeugt wurde. Insbesondere umfasst er die Erzeugung durch Umformen und die Erzeugung durch spanende Verfahren wie Fräsen und/oder Bohren. Er kann somit auch synonym mit Freistellungsbohrung verwendet werden.

Das ring- oder plattenförmige Element dient als Basis für eine Metall-Fixiermaterial-Durchführung mit insgesamt zwei Metallstiften 50, 52. Während der Metallstift 50 in einem Fixiermaterial 60, hier einem Glasmaterial, das aber auch ein Glaskeramikmaterial oder ein Keramikmaterial sein kann, isoliert zum ring- oder plattenförmigen Grundkörper 1 von der Vorder- zur Rückseite hindurchgeführt wird, dient der zweite Metallstift 52 als Massestift. Hierzu wird der zweite Metallstift 52 direkt mit dem ring- oder plattenförmigen Körper 1 verbunden. Sowohl der Metallstift 50 wie der Metallstift 52 sind gebogen ausgeführt. Der Bogen beider Metallstifte ist mit 54 bzw. 56 bezeichnet und deutlich erkennbar.

Der Metallstift 50 ist zudem mit Mitteln 62 am Metallstift 50 selbst versehen, die in den Glaspfropfen eingreifen und so ein Herausdrücken des Metallstiftes aus dem Glaspfropfen 60, in der der Metallstift eingeglast ist, auch bei hohen Drücken verhindert.

Das Einglasen des Metallstiftes 50 in das Fixiermaterial 10 erfolgt durch Einschmelzen. Sobald der Metallstift in das Fixiermaterial eingeschmolzen ist, wird der Glaspfropfen zusammen mit dem Metallstift in die Durchgangsöffnung 10 eingebracht. Anschließend wird der Glaspfropfen zusammen mit dem ring- oder plattenförmigen Element, d.h. dem Grundkörper, erwärmt, so dass nach dem Abkühlen das Metall des ring- oder plattenförmigen Elements auf das Fixiermaterial, hier das Glasmaterial, aufschrumpft, wie schon zuvor bei der Herstellung des Glaspfropfens, bei dem der Metallstift in den Glaspfropfen eingebracht wird. Der als Erde dienende Metallstift 52 wird mit dem plattenförmigen Element leitend, beispielsweise durch Hartlöten, verbunden. Die Lotstelle ist mit 70 bezeichnet.

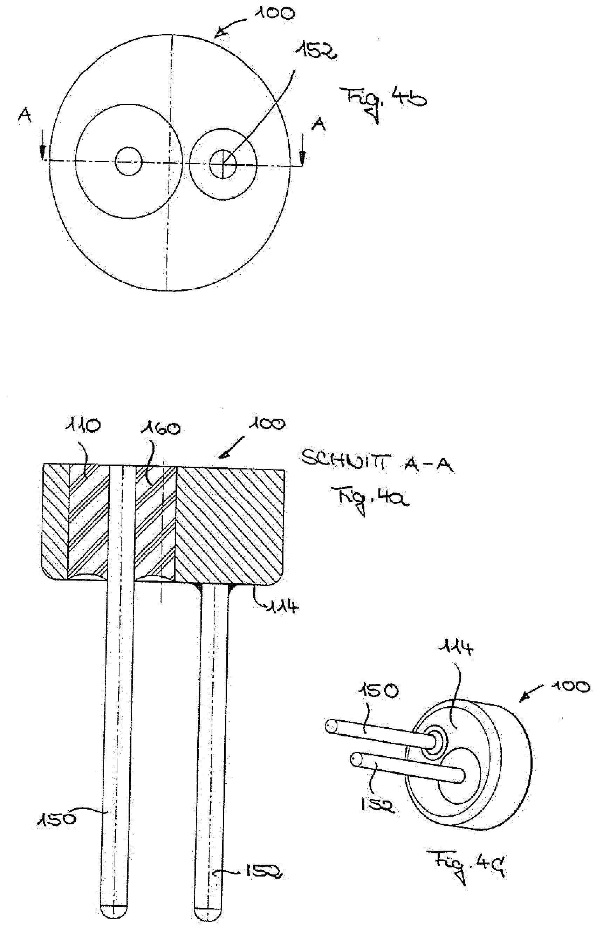

Fig. 3b zeigt eine Draufsicht von der Rückseite 14 auf eine erfindungsgemäße Metall-Fixiermaterial-Durchführung. In der Draufsicht deutlich zu erkennen ist die zentrale Durchführung 10 in dem ring- oder plattenförmigen Element 1. Des Weiteren deutlich zu erkennen ist der gebogene Metallstift 50 bzw. 52. Insbesondere bei Metallstift 50 ist deutlich zu erkennen, dass der Metallstift an seinem Ende 72 gegenüber der Mitte R des ring- oder plattenförmigen Grundkörpers versetzt, d.h. gebogen ist. Dies trifft auch auf den Metallstift 52 zu. Die gebogenen Stifte sind auch gut in der Ansicht in Fig. 3c zu erkennen. Die Ansicht in Fig. 3c der gesamten Metall-Fixiermaterial-Durchführung zeigt insbesondere auch den Lötbereich 70 des Massestiftes sowie den Freistellungsbereich 5 im ring- oder plattenförmigen Grundkörper. Charakteristisch für eine Metall-Fixiermaterial-Durchführung mit einem ring- oder plattenförmigen Element als Grundkörper gemäß der Erfindung, aufweisend einen Freistellungsbereich 5, ist, dass die Einglasung 20 des Metallstiftes in den Grundkörper nur über einen Teilbereich, nämlich nur über die Dicke DR der Durchgangsöffnung erfolgt ist und nicht über die Gesamtdicke D des Grundkörpers. Im Gegensatz hierzu erfolgt die Einglasung bei einer Metall-Fixiermaterial-Durchführung gemäß dem Stand der Technik, wie in den Figuren 4a-4c gezeigt, über die gesamte Dicke DS des ring- oder plattenförmigen, geformten Grundkörpers, wie er in den Figuren 2a-2c dargestellt ist. Die Einglasung 160 ist ebenfalls wieder mit einem Metallstift 150 in der Durchgangsöffnung 110 des ring- oder plattenförmigen Elementes vorgenommen. Während der Metallstift 150 in die Einglasung 160 eingelassen ist, wird der Massestift 152 auf den ring- oder plattenförmigen Grundkörper 100 aufgelötet. Beide Stifte, Metallstift 150 und Massestift 152 sind gerade ausgeführt.

Fig. 4b zeigt eine Draufsicht auf eine Metall-Fixiermaterial-Durchführung gemäß Fig. 4a. Gleiche Bauteile wie in Fig. 4a sind mit denselben Bezugsziffern gekennzeichnet. Wie deutlich zu erkennen ist, weisen die Metallstifte 150, 152 keine gebogene Struktur auf. Fig. 4c ist eine perspektivische Ansicht von der Rückseite 114 des Bauteils gemäß Fig. 4a - 4b.

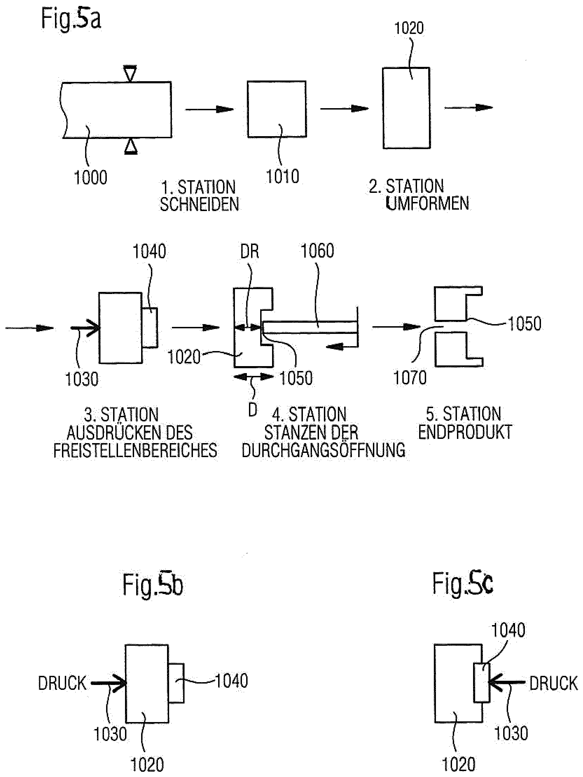

In Figur 5a sind die verschiedenen Stationen einer Ausführungsform eines Herstellverfahrens für ein plattenförmiges Element dargestellt. In der ersten Station wird von einem drahtförmigen Material 1000 ein Rohling 1010 abgetrennt bzw. abgeschnitten. Im zweiten Schritt, das heißt an der zweiten Station, zu der der abgeschnittene Rohling in einem Herstellungsprozess transportiert wird, wird der Rohling 1010 durch Stauchen geformt, insbesondere kaltgeformt, bis die Außenabmessungen den Außenabmessungen entsprechen, die das zu verarbeitende ring- oder plattenförmige Element aufweisen muss. Hierbei werden die relativen geometrischen Abmessungen geändert, vorliegend wird der Rohling durch das Stauchen breiter. In der nachfolgenden dritten Station wird das umgeformte plattenförmige Element 1020 mit Druck 1030 gegen einen Stempel 1040 gepresst. Das Material des ring- oder plattenförmigen Elementes umschließt aufgrund des Druckes, mit dem das ring- oder plattenförmige Element gegen den Stempel gedrückt wird, den Stempel. Hierdurch wird das Material im Bereich des Stempels aus dem plattenförmigen Element entfernt und es verbleibt das in der vierten Station dargestellte plattenförmige Element mit einer Freistellungsöffnung beziehungsweise Freistellungsbereich 1050. Die Beschreibung der Abfolge der vorgenannten Verfahrensschritte ist nur beispielhaft. Es könnte auch zunächst in einen Rohling die Freistellungsöffnung eingebracht und daran anschließend die Umformung vorgenommen werden. Auch wäre es möglich den Umformschritt in Station 2 und das Einbringen des Freistellungsbereiches beispielsweise durch Formen in Station 3 in einer einzigen Station zum Beispiel Station 2 vorzunehmen. Station 3 entfiele dann.

Durch den Freistellungsbereich ist im Bereich 1060 des ring- oder plattenförmigen Elementes die Dicke D des plattenförmigen Elementes stark reduziert worden, nämlich auf eine Dicke DR. Die Dicke D des ring- oder plattenförmigen Elements wird hierbei zwischen 20 % und 60 %, insbesondere zwischen 30 % und 50 %, reduziert, d. h. die Dicke DR beträgt zwischen 80% und 40% bevorzugt zwischen 70% und 60% der Dicke D. Nunmehr wird in einem fünften Verfahrensschritt ein Stanzwerkzeug 1060 in die Freistellungsöffnung eingeführt und durch einen Stanzschritt, beispielsweise eine konische Durchgangsöffnung 1070 durch das ring- oder plattenförmige Element mit der reduzierten Dicke hindurchgetrieben. Im Wesentlichen resultiert dann das ring- oder plattenförmige Element mit Freistellungsöffnung und Durchgangsöffnung wie in der fünften Station dargestellt. Das erfindungsgemäße Verfahren zeichnet sich dadurch aus, dass für jede der angegebenen Stationen, das heißt das Abschneiden vom drahtförmigem Grundmaterial, das Umformen, das Einbringen der Freistellungsöffnung beziehungsweise des Freistellungsbereiches und dem Ausstanzen der Durchgangsöffnung aus dem plattenförmigen Element mit reduzierter Dicke im Wesentlichen die gleiche Taktzeit des Bearbeitungsschrittes vorliegt. Hierdurch ist es möglich, das erfindungsgemäße Verfahren sehr hoch zu automatisieren.

In den Figuren 5b und 5c sind zwei prinzipiell mögliche beispielhafte Verfahren zum Einbringen des Freistellungsbereiches und/oder von weiteren Öffnung durch Formen gezeigt. In Figur 5b wird wie in Figur 5a im dritten Schritt das ring- oder plattenförmige Element 1020 gegen einen Stempel 1040 gepresst, sodass das Material den Stempel umfließt und hieraus eine Freistellungsöffnung und/oder eine weitere Öffnung resultiert. Alternativ wäre es möglich, wie in Figur 5c gezeigt, dass nicht der plattenförmige Grundkörper 1020 gegen einen Stempel 1040 gepresst wird, sondern umgekehrt der Stempel 1040 gegen den ring- oder plattenförmigen Grundkörper 1020. Dann wird aufgrund des Druckes auf der dem Stempel gegenüber liegenden Seite des ring- oder plattenförmigen Körpers das Material heraustransportiert. Im Ergebnis folgt wieder das ring- oder plattenförmige Element mit Freistellungsbereich und/oder einer weiteren Öffnung.

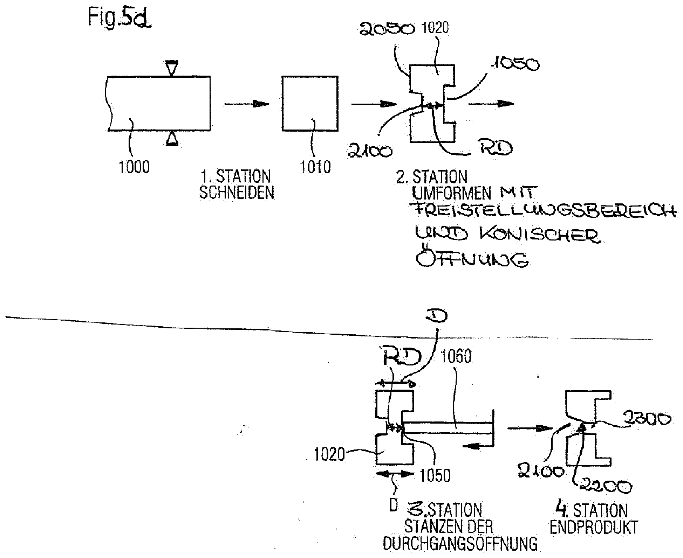

In Fig. 5d ist ein Verfahren gezeigt, bei dem zusätzlich zu einem Freistellungsbereich 1050 auf der gegenüberliegenden Seite 2050 eine weitere Öffnung 2100 eingebracht wird, bevor dann die sich ergebende Restdicke RD durchstanzt wird. Für gleiche Bauteile wie in Fig. 5a - 5c werden gleiche Bezugsziffern verwandt. Bevorzugt wird die weitere Öffnung, die bevorzugt konisch sein kann, durch Formen beispielsweise mittels eines Stempels eingebracht. Ganz bevorzugt aber nicht notwendig ist es, wenn in der zweiten Station beim Umformen bereits der Freistellungsbereich 1050 und auf der dem Freistellungsbereich 1050 gegenüberliegenden Seite 2050 die weitere, bevorzugt konische Öffnung 2100, insbesondere ebenfalls durch Formen eingebracht wird. Dies hat den Vorteil, dass nur ein Verfahrensschritt notwendig ist. Durch das Einbringen der weiteren Öffnung muss nur noch die zwischen der weiteren Öffnung 2100 und dem Freistellungsbereich 1050 liegende Restdicke RD in der Stanzstation durchstoßen werden, um die Durchgangsöffnung zur Verfügung zu stellen, in die der Metallstift eingeglast wird. Wie deutlich zu erkennen, weist dann beispielsweise die Durchgangsöffnung 2200 zwei Bereiche auf, einen konischen Bereich bzw. eine konische Öffnung 2100 sowie einen ausgestanzten Bereich 2300. Mit dem alternativen Verfahren lässt sich somit die konische Öffnung besonders einfach, nämlich durch Formen bevorzugt im Umformschritt, erzeugen. Selbstverständlich könnte wie bei Verfahren in Figur 5a in Station 2 zunächst der Rohling gestaucht werden und anschließend an diesen Schritt die Freistellungsbohrung und/oder die weitere Öffnung hergestellt werden. Die zu durchstoßende Restdicke RD beträgt hierbei zwischen 10% und 70% der Gesamtdicke D, bevorzugt zwischen 30% und 50% der Gesamtdicke D des ring- oder plattenförmigen Elementes.

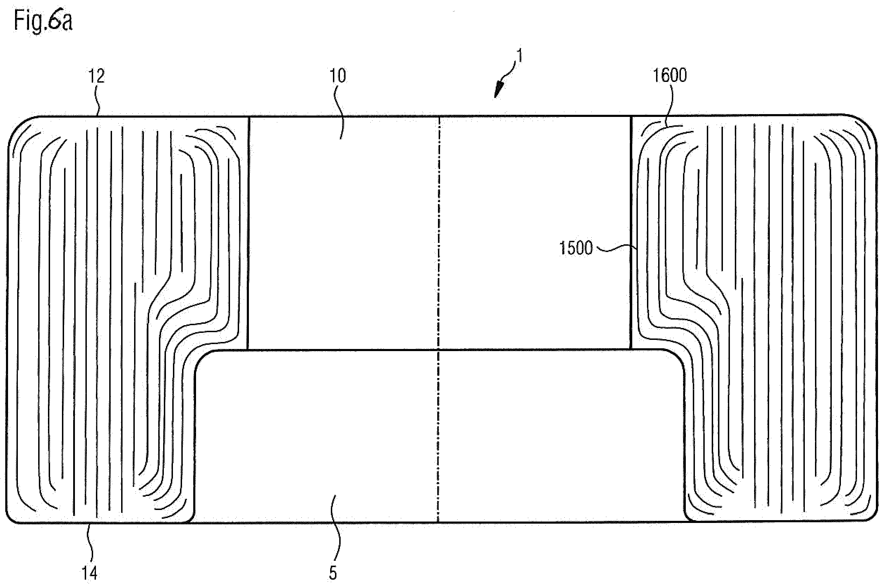

In Fig. 6a ist ein metallurgischer Schliff durch ein mit einem Umform- und Stanzverfahren hergestelltes ring- oder plattenförmiges Element 1, wie in Fig. 1a dargestellt, gezeigt.

Gleiche Bauteile wie in Fig. 1a sind mit denselben Bezugsziffern bezeichnet.

Wie aus dem metallurgischen Schliff gemäß Fig. 6a hervorgeht, sind die nach dem erfindungsgemäßen Verfahren hergestellten ring- oder plattenförmigen Elemente 1 durch Struktur-/Fließlinien 1500 gekennzeichnet, die im Bereich 1600 durch den Umformprozess gebeugt worden sind.

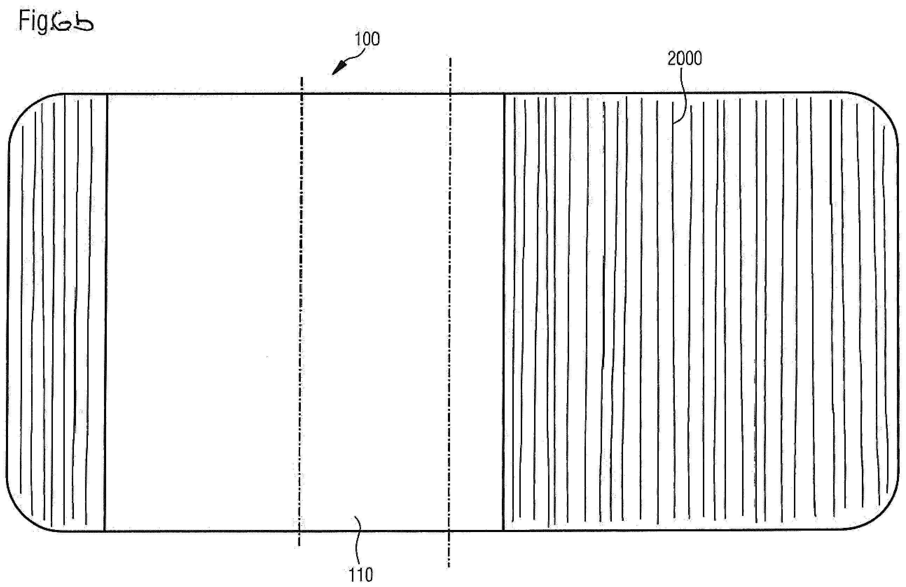

Im Gegensatz hierzu zeigt Fig. 6b ein mittels Zerspanen hergestelltes Bauteil 100, das insbesondere ein Drehteil ist. Wiederum eingezeichnet sind die Struktur-/Fließlinien 2000. Die Struktur-/Fließlinien 2000 sind im Wesentlichen parallel und zeigen in die gleiche Richtung wie das Stangenmaterial, aus dem das ring- bzw. plattenförmige Bauteil 100, wie in Fig. 6b dargestellt, hergestellt wurde. Die Durchgangsöffnung 110 ist aus dem Bauteil 100 herausgebohrt.

Mit der Erfindung wird erstmals ein ring- oder plattenförmiges Element angegeben, das auf einfache Art und Weise herzustellen ist und sich durch Kompatibilität mit den Metall-Fixiermaterial-Durchführungen gemäß dem Stand der Technik auszeichnet, wodurch ein Verbauen in herkömmliche Anzünder bzw. Airbags möglich ist. Insbesondere ist es mit der Erfindung möglich, Metall-Fixiermaterial-Durchführungen für qualifizierte, bereits bestehende Anzünderdesigns materialsparender herzustellen. Insbesondere ist auch ein Verfahren angegeben, mit dem auf besonders einfache Art und Weise eine konische Durchgangsöffnung, die eine Ausführungsform einer Durchgangsöffnung mit Mitteln zum Vermeiden einer Relativbewegung ist, hergestellt werden kann. Des Weiteren angegeben ist ein Verfahren, nach dem auf einfache Art und Weise ein plattenförmiges Element hergestellt werden kann.

Die Erfindung umfasst die nachfolgenden Aspekte, die in den Sätzen niedergelegt sind, die Teil der Beschreibung sind, aber keine Ansprüche:

### Sätze

1. Ring- oder plattenförmiges Element (1), insbesondere für eine Metall-Fixiermaterial-Durchführung, insbesondere für Einrichtungen, die hohen Drücken ausgesetzt sind, bevorzugt Anzündern von Airbags oder Gurtspannern,
   mit einer Durchgangsöffnung (10), wobei die Durchgangsöffnung (10) im Wesentlichen in der Mitte des ring- oder plattenförmigen Elementes (1) angeordnet ist und das plattenförmige Element (1) eine Dicke (D) aufweist, dadurch gekennzeichnet, dass
   das ring- oder plattenförmige Element (1) im Bereich der Durchgangsöffnung (10) einen Freistellungsbereich (5) aufweist und das ring- oder plattenförmige Element (1) im Freistellungsbereich (5) wenigstens eine um die Höhe (HF) des Freistellungsbereiches (5) reduzierte Dicke (DR) aufweist, die derart gewählt ist, dass die Durchgangsöffnung aus dem ring- oder plattenförmigen Element mit der reduzierten Dicke (DR) ausgestanzt werden kann.
2. Ring- oder plattenförmiges Element gemäß Satz 1,
   dadurch gekennzeichnet, dass
   die Dicke (D) des ring- oder plattenförmigen Elementes im Freistellungsbereich zwischen 20 % und 90%, insbesondere zwischen 30 % und 70 %, bevorzugt zwischen 40% und 50% reduziert wird.
3. Ring- oder plattenförmiges Element gemäß Satz 1,
   dadurch gekennzeichnet, dass
   die Dicke (D) des plattenförmigen Elementes größer als 3,5 mm ist, insbesondere im Bereich 3,5 mm bis 6,0 mm liegt und/oder die reduzierte Dicke (DR) im Bereich 1,5 mm bis 4,5 mm, bevorzugt im Bereich 2,0 mm bis 2,6 mm liegt und/oder die Restdicke (RD) im Bereich 0,35 mm bis 4,2 mm, bevorzugt im Bereich 1,1 mm bis 3,0 mm liegt.
4. Ring- oder plattenförmiges Element nach einem der Sätze 1 bis 3, dadurch gekennzeichnet, dass
   das ring- oder plattenförmige Element aus einem Stahl, insbesondere einem Edelstahl mit einem Kupferanteil von 1 Gew.% bis 5 Gew.%, insbesondere 2,0 Gew.% bis 4 Gew.% besteht.
5. Plattenförmiges Element nach einem der Sätze 1 bis 4,
   dadurch gekennzeichnet, dass
   das ring- oder plattenförmige Element im Wesentlichen eine runde, insbesondere kreisförmige Außenform (3) aufweist und durch ein Formverfahren, beziehungsweise ein Umformverfahren, bevorzugt eine Kaltumformung, aus einem drahtförmigen Element erhalten wird.
6. Ring- oder plattenförmiges Element nach einem der Sätze 1 bis 5, dadurch gekennzeichnet, dass
   die Durchgangsöffnung (10) Mittel zum Vermeiden von Relativbewegungen aufweist, bevorzugt wenigstens teilweise einen im Wesentlichen konischen Verlauf (20).
7. Metall-Fixiermaterial-Durchführung, insbesondere für Einrichtungen, die hohen Drücken ausgesetzt sind, bevorzugt Anzündern von Airbags oder Gurtspannern, mit
   einem Metallstift (50), der in einer Öffnung in einem Grundkörper in einem Fixiermaterial (60) angeordnet ist,
   dadurch gekennzeichnet, dass
   der Grundkörper ein ring- oder plattenförmiges Element (1) nach einem der Ansprüche 1 bis 6 ist und die Öffnung für den Metallstift (50) die Durchgangsöffnung (10) des ring- oder plattenförmigen Elementes ist.
8. Metall-Fixiermaterial-Durchführung, gemäß Satz 7,
   dadurch gekennzeichnet, dass
   der Metallstift (50) gebogen ausgeführt ist.
9. Metall-Fixiermaterial-Durchführung, gemäß einem der Sätze 7 bis 8,
   dadurch gekennzeichnet, dass
   die Metall-Fixiermaterial-Durchführung einen weiteren Metallstift (52) umfasst, der bevorzugt als Massestift ausgebildet und mit dem Grundkörper leitend verbunden ist.
10. Verwendung einer Metall-Fixiermaterial-Durchführung nach einem der Sätze 7 bis 9 in einem der nachfolgenden Bereiche:
   - in einer Zündereinrichtung für Airbags,
   - in einer Zündereinrichtung für Gurtspanner.
11. Verfahren zur Herstellung eines ring- oder plattenförmigen Elementes, insbesondere für eine Metall-Fixiermaterial-Durchführung, insbesondere für Einrichtungen, die hohen Drücken ausgesetzt sind, bevorzugt Anzündern von Airbags oder Gurtspannern, mit einer Durchgangsöffnung, bevorzugt nach einem der Sätze 1 bis 6 wobei
   ein Rohling (1000), insbesondere aus einem drahtförmigen Material, zur Verfügung gestellt wird und der Rohling (1000) einer Bearbeitung unterzogen wird, derart, dass in ein aus dem Rohling (1000) umgeformtes ring- oder plattenförmiges Element (1010) die Durchgangsöffnung (1070) durch Stanzen eingebracht werden kann.
12. Verfahren nach Satz 11,
   dadurch gekennzeichnet, dass
   die Bearbeitung des Rohlings (1000) ein Formen, bevorzugt ein Kaltformen, insbesondere ein Stauchen, umfasst.
13. Verfahren nach einem der Sätze 1 bis 12,
   dadurch gekennzeichnet, dass
   - zum Einbringen eines Freistellungsbereiches (1050) und/oder einer weiteren Öffnung, die bevorzugt eine konische Öffnung (2100) ist, der Rohling (1000) oder das ring- oder plattenförmige Element (1010) gegen einen Stempel (1040) gepresst wird und Material des Rohlings (1000) oder ring- oder plattenförmigen Elementes (1010) den Stempel umfließt.
      oder
   - zum Einbringen des Freistellungsbereiches (1050) und/oder einer weiteren Öffnung, die bevorzugt eine konische Öffnung (2100) ist, ein Stempel (1040) gegen eine Seite des Rohlings (1000) oder ring- oder plattenförmigen Elementes (1010) gepresst wird und das Material des Rohlings (1000) oder ring- oder plattenförmigen Elements auf der gegenüberliegende Seite des plattenförmigen Elementes herausgedrückt wird.
14. Verfahren nach einem der Sätze 11 bis 13,
   dadurch gekennzeichnet, dass
   nach dem Einbringen eines Freistellungsbereiches (1050) und/oder einer weiteren Öffnung, die bevorzugt eine konische Öffnung (2100) ist, in den Freistellungsbereich ein Stanzwerkzeug (1060) eingebracht wird, um die Durchgangsöffnung (1070) durch Stanzen zur Verfügung zu stellen.
15. Verfahren zur Herstellung einer Metall-Fixiermaterial-Durchführung, umfassend die folgenden Schritte:
   - Herstellen eines plattenförmigen Körpers nach einem der Sätze 11 bis 14;
   - Herstellen eines Fixiermaterial (60), umfassend wenigstens einen in das Fixiermaterial (60) eingelassenen Metallstift;
   - Einsetzen des Fixiermaterials (60) mit Metallstift (50) in die Durchgangsöffnung (10, 1070) des plattenförmigen Elementes (1, 1010);
   - Erweichen von plattenförmigem Element (1, 1010) und Fixiermaterial (60) sowie anschließendes Abkühlen, so dass zwischen Fixiermaterial und dem Material des plattenförmigen Elementes eine kraftschlüssige Verbindung ausgebildet wird.

## Patentansprüche

1. Ring- oder plattenförmiges Element (1), insbesondere für eine Metall-Fixiermaterial-Durchführung, insbesondere für Einrichtungen, die hohen Drücken ausgesetzt sind, bevorzugt Anzündern von Airbags oder Gurtspannern,
mit einer Durchgangsöffnung (10), wobei die Durchgangsöffnung (10) im Wesentlichen in der Mitte des ring- oder plattenförmigen Elementes (1) angeordnet ist, das plattenförmige Element (1) eine Dicke (D) aufweist, **dadurch gekennzeichnet, dass**
das ring- oder plattenförmige Element (1) im Bereich der Durchgangsöffnung (10) einen Freistellungsbereich (5) hat und das ring- oder plattenförmige Element (1) im Freistellungsbereich (5) wenigstens eine um die Höhe (HF) des Freistellungsbereiches (5) reduzierte Dicke (DR) aufweist, die derart gewählt ist, dass die Durchgangsöffnung aus dem ring- oder plattenförmigen Element mit der reduzierten Dicke (DR) ausgestanzt wird, wobei
der Freistellungsbereich durch Formen eingebracht ist.

2. Ring- oder plattenförmiges Element nach Anspruch 1,
**dadurch gekennzeichnet, dass**
die Durchgangsöffnung (10) Mittel zum Vermeiden von Relativbewegungen aufweist, bevorzugt wenigstens teilweise einen im Wesentlichen konischen Verlauf (20) und der konische Verlauf durch Formen hergestellt wird.

3. Ring- oder plattenförmiges Element gemäß einem der Ansprüche 1 bis 2,
**dadurch gekennzeichnet, dass**
die Dicke (D) des ring- oder plattenförmigen Elementes im Freistellungsbereich zwischen 20 % und 90%, insbesondere zwischen 30 % und 70 %, bevorzugt zwischen 40% und 50% reduziert wird.

4. Ring- oder plattenförmiges Element gemäß einem der Ansprüche 1 bis 3,
**dadurch gekennzeichnet, dass**
die Dicke (D) des plattenförmigen Elementes größer als 3,5 mm ist, insbesondere im Bereich 3,5 mm bis 6,0 mm liegt und/oder die reduzierte Dicke (DR) im Bereich 1,5 mm bis 4,5 mm, bevorzugt im Bereich 2,0 mm bis 2,6 mm liegt und/oder die Restdicke (RD) im Bereich 0,35 mm bis 4,2 mm, bevorzugt im Bereich 1,1 mm bis 3,0 mm liegt.

5. Ring- oder plattenförmiges Element nach einem der Ansprüche 1 bis 4,
**dadurch gekennzeichnet, dass**
das ring- oder plattenförmige Element aus einem Stahl, insbesondere einem Edelstahl mit einem Kupferanteil von 1 Gew.% bis 5 Gew.%, insbesondere 2,0 Gew.% bis 4 Gew.% besteht.

6. Plattenförmiges Element nach einem der Ansprüche 1 bis 5,
**dadurch gekennzeichnet, dass**
das ring- oder plattenförmige Element im Wesentlichen eine runde, insbesondere kreisförmige Außenform (3) aufweist und durch ein Formverfahren, beziehungsweise ein Umformverfahren, bevorzugt eine Kaltumformung, aus einem drahtförmigen Element erhalten wird.

7. Metall-Fixiermaterial-Durchführung, insbesondere für Einrichtungen, die hohen Drücken ausgesetzt sind, bevorzugt Anzündern von Airbags oder Gurtspannern, mit
einem Metallstift (50), der in einer Öffnung in einem Grundkörper in einem Fixiermaterial (60) angeordnet ist,
**dadurch gekennzeichnet, dass**
der Grundkörper ein ring- oder plattenförmiges Element (1) nach einem der Ansprüche 1 bis 6 ist und die Öffnung für den Metallstift (50) die Durchgangsöffnung (10) des ring- oder plattenförmigen Elementes ist.

8. Metall-Fixiermaterial-Durchführung, gemäß Anspruch 7,
**dadurch gekennzeichnet, dass**
der Metallstift (50) gebogen ausgeführt ist.

9. Metall-Fixiermaterial-Durchführung, gemäß einem der Ansprüche 7 bis 8,
**dadurch gekennzeichnet, dass**
die Metall-Fixiermaterial-Durchführung einen weiteren Metallstift (52) umfasst, der bevorzugt als Massestift ausgebildet und mit dem Grundkörper leitend verbunden ist.

10. Verwendung einer Metall-Fixiermaterial-Durchführung nach einem der Ansprüche 7 bis 9 in einem der nachfolgenden Bereiche:
- in einer Zündereinrichtung für Airbags,
- in einer Zündereinrichtung für Gurtspanner.

11. Verfahren zur Herstellung eines ring- oder plattenförmigen Elementes, insbesondere für eine Metall-Fixiermaterial-Durchführung, insbesondere für Einrichtungen, die hohen Drücken ausgesetzt sind, bevorzugt Anzündern von Airbags oder Gurtspannern, mit einer Durchgangsöffnung, bevorzugt nach einem der Ansprüche 1 bis 6 wobei
ein Rohling (1000), insbesondere aus einem drahtförmigen Material, zur Verfügung gestellt wird und in den Rohling (1000) ein Freistellungsbereich durch Formen eingebracht wird, derart, dass in ein aus dem Rohling (1000) umgeformtes ring- oder
plattenförmiges Element (1010) die Durchgangsöffnung (1070) durch Stanzen eingebracht werden kann.

12. Verfahren nach Anspruch 11,
**dadurch gekennzeichnet, dass**
der durch Formen eingebrachte Freistellungsbereich durch einen Stempel eingebracht wird.

13. Verfahren nach einem der Ansprüche 11 bis 12,
**dadurch gekennzeichnet, dass**
- zum Einbringen des Freistellungsbereiches (1050) und/oder einer weiteren Öffnung, die bevorzugt eine konische Öffnung (2100) ist, der Rohling (1000) oder das ring- oder plattenförmige Element (1010) gegen den Stempel (1040) gepresst wird und Material des Rohlings (1000) oder ring- oder plattenförmigen Elementes (1010) den Stempel umfließt.
oder
- zum Einbringen des Freistellungsbereiches (1050) und/oder einer weiteren Öffnung, die bevorzugt eine konische Öffnung (2100) ist, der Stempel (1040) gegen eine Seite des Rohlings (1000) oder ring- oder plattenförmigen Elementes (1010) gepresst wird und das Material des Rohlings (1000) oder ring- oder plattenförmigen Elements auf der gegenüberliegende Seite des plattenförmigen Elementes herausgedrückt wird.

14. Verfahren nach einem der Ansprüche 11 bis 13,
**dadurch gekennzeichnet, dass**
nach dem Einbringen des Freistellungsbereiches (1050) durch Formen , in den Freistellungsbereich ein Stanzwerkzeug (1060) eingebracht wird, um die Durchgangsöffnung (1070) durch Stanzen zur Verfügung zu stellen.

15. Verfahren zur Herstellung einer Metall-Fixiermaterial-Durchführung, umfassend die folgenden Schritte:
- Herstellen eines plattenförmigen Körpers nach einem der Ansprüche 11 bis 14;
- Herstellen eines Fixiermaterial (60), umfassend wenigstens einen in das Fixiermaterial (60) eingelassenen Metallstift;
- Einsetzen des Fixiermaterials (60) mit Metallstift (50) in die Durchgangsöffnung (10, 1070) des plattenförmigen Elementes (1, 1010);
- Erweichen von plattenförmigem Element (1, 1010) und Fixiermaterial (60) sowie anschließendes Abkühlen, so dass zwischen Fixiermaterial und dem Material des plattenförmigen Elementes eine kraftschlüssige Verbindung ausgebildet wird.
